# EUROPEAN PATENT APPLICATION

(11) **EP 1 013 321 A1**
(43) Date of publication of application: **28.06.2000**
(21) Application number: 98937853.4
(22) Date of filing: 18.08.1998
(51) Int. Cl.: A63F 9/22

(54) **NETWORK GAME SYSTEM**

(30) Priority: 28.08.1997 JP 24600997
(71) Applicant: Inter Vision Corporation, Tokyo 113-0033 (JP)
(72) Inventor: YOO, Sung-Sam Inter Vision Corporation, Tokyo 113-0033 (JP)
(74) Representative: Johnstone, Douglas Ian
(86) International application number: JP9803659
(87) International publication number: WO9911343

(57) **Abstract**

A system to play a game through network to be used for attracting customers to stores or shopping malls by identifying game participants, proceeding the game only once a day and limiting the period of time.

Each shop is provided with one or more POS terminal 1 also acting as a game terminal or a terminal exclusively for games and connected to a game server 3 in the center through internet. A magnetic card is issued to each game participant for identifying the individual. A customer coming to the store inserts his/her magnetic card into a POS terminal 1 to receive one lucky number of the bingo game. If the lucky number is equal to one of the numbers on his/her bingo card, such information is sent to the center. Such operation is repeated no more than once a day and a prize will be awarded if BINGO is established within 30 days. Similarly, in addition to the bingo game, "sugoroku" game or other games can be played. Since the game can proceed no more than once a day, customers are encouraged to come to the store everyday, thereby making it effective for customer attraction.

## Description

### (Field of Invention)

The present invention relates to a network game system, more specifically to a system for identifying each game participant and proceeding the game once or several times a day until the game is terminated in a predetermined period of time.

### (Prior Art)

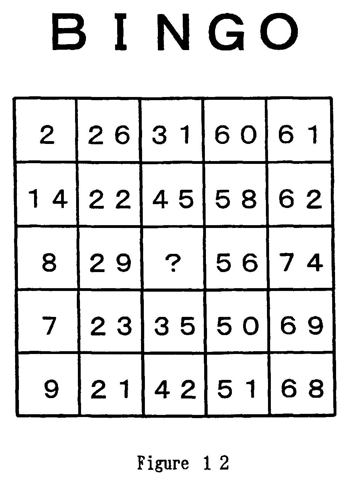

Many games such as bingo games are popular among not only adults but also children. As shown in FIG.12, bingo games are played using cards having written numbers in matrix on a paper card. Disclosed in, for example, JP-A -7-328178 (328178/'95), is a bingo game to be played with a copy type card. Also known is an electronics bingo game to be joined through network. Disclosed in JP-A -5-317485 (317485/'93) is a bingo game system using a conventional number selection drum and also electronic technique for reading numbers, displaying numbers in arrays, summing up the numbers. JP-A-7-136311 (136311/'95) discloses a technique for sequentially printing symbols on a card whenever a user (or customer) buys something, thereby proceeding a bingo game. JP-A-8-501236 (501236/'96) discloses a technique for transmitting and receiving data between a base station and terminals to proceeds a bingo game through network.

However, such conventional game systems computerizes any game using paper cards, thereby continuously playing the game over indefinite time. They are effective to speed up the process of the game and to make the game enthusiastic. However, the players are bored in a shorter time, thereby spoiling the game. Also, since the game is played by any participant in the conventional game system, it is impossible that the game is played by identified participants for a specified period of time.

The present invention is directed to a network game system played by identified players, proceeding at a controlled pace, limited to a predetermined period of time and maintaining the enjoyment of the game over a long time.

### (Means to Solve the Problems)

For this end, the network game system according to the present invention comprises means for identifying game participants, means for limiting the process of the game to once to several times a day and means for setting the time to terminate the game.

The aforementioned construction of the game will help the game participants to enjoy it over a long time. Also, identifying the game participants or players will help to limit the players. If the game is applied to customers (or buyers) of shops of a large chain-stores or shopping malls (referred to as stores below), the game system will be effective as a customer attraction event.

### (Brief Description of Drawings )

- (FIG.1): A system configuration of a first embodiment of the network game system according to the present invention.
- (FIG.2): An initial screen display of the first embodiment of the network game system according to the present invention.
- (FIG.3): A game selection screen of the first embodiment of the network game system according to the present invention.
- (FIG.4): A flowchart showing how the bingo game of the first embodiment of the present invention proceeds.
- (FIG.5): A system configuration of the second embodiment of the network game system according to the present invention.
- (FIG.6): A flowchart showing how the "we'd like to visit distant places" game of the second embodiment according to the present invention proceeds.
- (FIG.7): A first screen display of the "we'd like to visit distant places" game of the second embodiment according to the present invention.
- (FIG.8): A second screen display of the "we'd like to visit distant places" game of the second embodiment according to the present invention.
- (FIG.9): A flowchart showing how the "sugoroku" game of the second embodiment according to the present invention proceeds.
- (FIG.10): A first screen display of the "sugoroku" game of the second embodiment according to the present invention.
- (FIG.11): A second screen display of the "sugoroku" game of the second embodiment according to the present invention.
- (FIG.12): A card for the bingo game.

### (Description of Preferred Embodiments)

Now, the invention as defined in claim 1 comprises a central unit for controlling how to proceed a game or games and a plurality of terminals connected to the central unit through network. The network game system provides a game to participants through the terminals interconnected through network. Each terminal includes means for identifying individual game participant. The central unit includes means for registering the game participants, means for recording numbers picked by each game participant and means for controlling the process of the game by predetermined times a day. The network game system provides customers to the store with enjoyment or excitement of the game over a long period of time.

The invention as defined in claim 2 is the network game system of claim 1, wherein each of the terminals is a POS (point of sales) terminal capable of giving enjoyment of a game or games to customers coming to the store over a long period of time.

The invention as defined in claim 3 is the network game system of claim 1, wherein the central unit is provided with means for terminating the game when a predetermined time is lapsed so that customers to the store can play the game only for the predetermined period of time.

The invention as defined in claim 4 is the network game system of claim 1, wherein each of the terminals is provided with means for transferring to the central unit the amount of money that each game participant has spent and the central unit is provided with means for giving a right to each customer to proceed the game once whenever he/she spends in excess of a predetermined amount of money, thereby providing the customers with enjoyment of the game whenever they purchase over a predetermined amount of money.

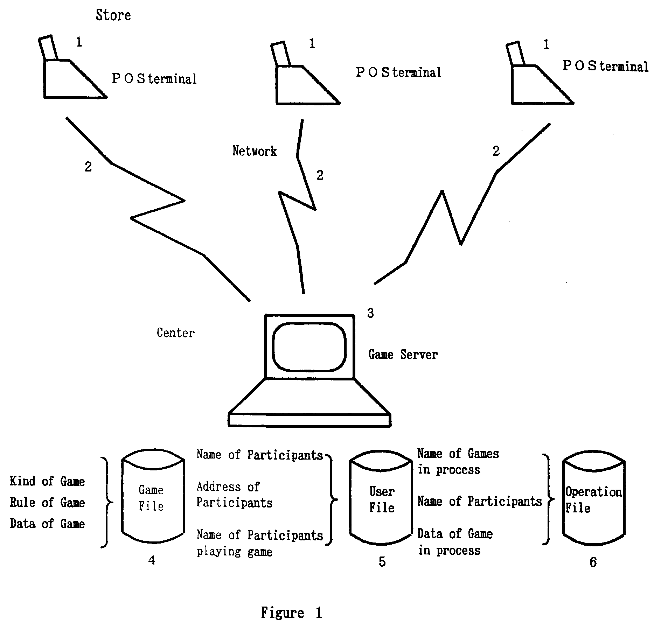

Now, detailed descriptions will he made on preferred embodiments of the present invention by reference to FIGs.1 through 12.

### (First Embodiment)

A first embodiment of the present invention is a network game system m which a game server installed in a center is connected to a POS terminal or terminals at each shop of a store through internet. The network game system identifies game participants, controls the process of a bingo game once a day and terminates the bingo game when a predetermined time has lapsed.

Illustrated in FIG.1 is a network game system configuration according to a first embodiment of the present invention. POS terminals 1 are installed at shops of a store to act not only as conventional POS terminals but also as terminals to identify game participants by allowing magnetic game cards to pass through the terminals and to communicate with a game server 3 in the center to proceed the game.

The POS terminals 1 are connected to the system basically for management of the sales. However, such basic portion is omitted in FIG.1. The communication lines 11 are internet communication lines but can be other lines or wireless lines. The game server 3 is a computer installed in the center for controlling the process of the game in communication with the POS terminals 1. A game file 4 is a file storing data such as rules of the game. A user file 5 is a file for storing data such as names of the game participants. An operation file 6 is a file for storing data such as the game in process.

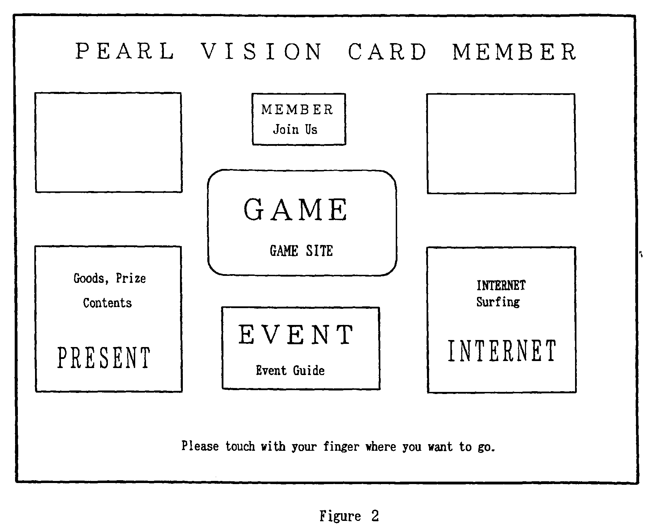

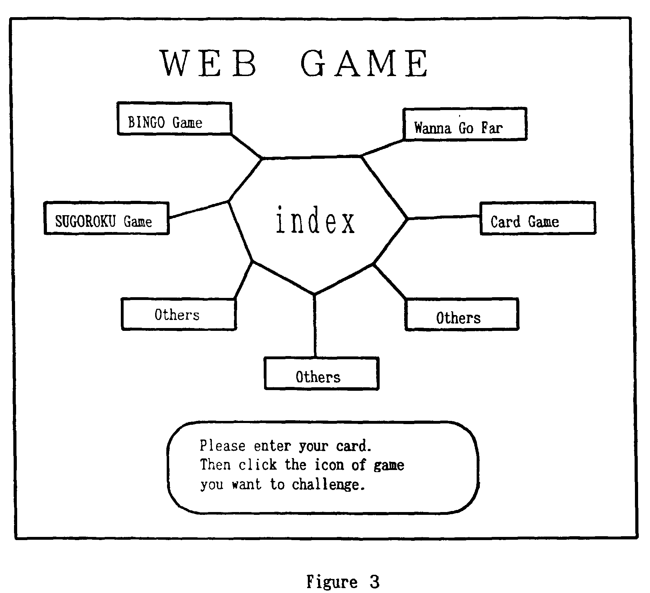

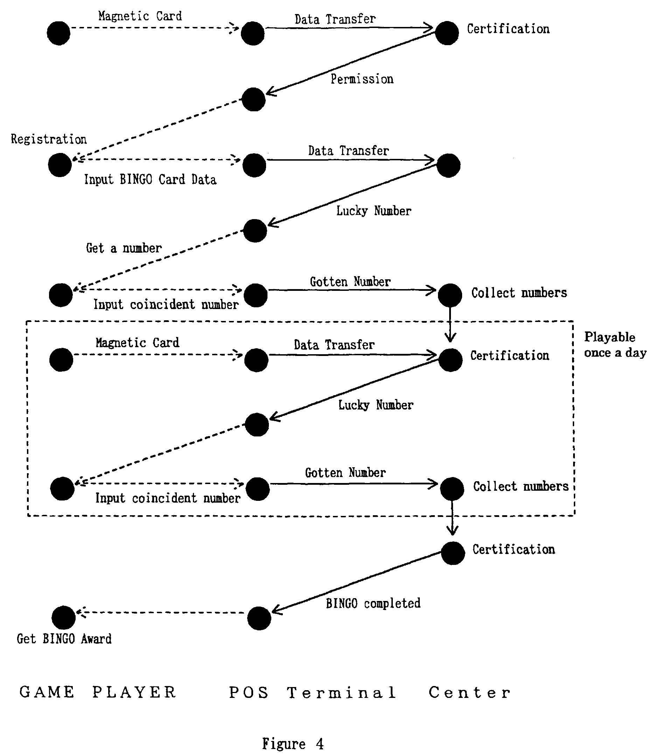

Now, reference is made to FIG.2 showing an initial screen display of the system for choosing games and other information access. FIG.3 is a game selection screen for selecting the game system and selecting a preferred game out of a plurality of games. FIG. 4 is a flowchart showing how the bingo game proceeds. Now, reference is made to FIGs.1 through 4 to describe the operation of the first embodiment of the network game system according to the present invention.

Prior to initiation of the game, the POS terminals 1 are used to register game participants. Registration data such as names and addresses of the game participants are entered and transferred to the center for recording and managing the user file 5. Upon completion of the registration, magnetic cards are issued to the game participants to be used for identifying the game participants by allowing the cards to pass through the POS terminals 1 when playing the game.

When the game starts, the magnetic card is inserted into the POS terminal 1 to select the bingo game. At the beginning of playing the bingo game, participants must choose 24 numbers to fill a bingo game card as illustrated in FIG. 12. If automatic mode is chosen, the game server 3 in the center randomly choose the numbers to fill the card. After choosing the numbers, participant data and the data for a bingo game are registered in the operation file 6. Subsequently, the game proceeds and is managed in accordance with the data in the operation file 6. Rules and the like of each game are registered in the game file 4 in advance.

Game participants come to any shop and choose the game on the initial screen display as shown in FIG.2. While the game selection screen of FIG.3 is displayed, the magnetic card is allowed to pass through the POS terminal 1 for identifying the game participants. .The data on the magnetic card will be transferred to the center. If there are any corresponding data in the operation file 6, the game server 3 notifies the POS terminal 1 to permit entry. After identifying individual participant, the game in process will be displayed on the selection screen of the POS terminal 1. If the bingo game is chosen by the participant, a bingo game card for the participant and a lucky number are displayed. The bingo game participants look at their bingo game cards and the lucky number on the screen. If there are any coincidence of the lucky number with the number on the bingo game card, the number on the bingo game card is touched by a finger. Negligence of the coincidence will invalidate the number. The data will be sent from the POS terminal 1 to the center so that the game server 3 in the center can check and record if BINGO is established. The lucky number will be generated and sent to the POS terminals 1 once a day from the center in a random manner.

The game participants can proceed the bingo game only once a day. The game server 3 in the center refers to the operation file 6 and checks the date when the game participant played the game last time so that the game does not proceed no more than once a day. Also, the date when each participant started the game is checked so that the game is not played longer than a predetermined period of time.

For example, if a participant comes to a shop only 10 days in 30 days period, the participant can gain only 10 lucky numbers. In the bingo game, a prize will be awarded only if 4 numbers ( for any row passing through the center ) or 5 numbers ( for any row other than passing through the center) coincide with the lucky number If a participant is lucky, BINGO will be established on the 4^{th} day. Unfortunately, if no BINGO is established in 30 days, he/she is a loser and may be awarded a consolation prize to terminate the game. The game server 3 in the center manages the times of the game played by each participant within the predetermined period of time. If not played 10 or more times, no consolation prize is awarded Since the bingo game is a kind of simple lottery, it can excite both adults and children.

As apparent from the above description, the first embodiment of the network game system according to the present invention comprises a game server in the center and a plurality of POS terminals installed in the shops and connected to the game server through internet. Any participant to the game is identified and the game is managed to proceed once a day and to terminate within a predetermined period of time. As a result, game participants among customers coming to the shops can play the bingo game everyday. This is effective to attract customers because they can gain a prize of the bingo game when they go shopping to the shops.

Although the game participants are identified by their magnetic cards to be passed through the POS terminals in the first embodiment of the network game system, it is also possible to use appropriate ID numbers or any other hi-tech personal identification means such as, for example, a finger print reference system. Since it is only necessary to identify individuals with certain reliability, any commonly used ID means is sufficient for this purpose.

### (Second Embodiment)

Now, a second embodiment of the present invention comprises a game server in the center and POS terminals installed in shops and connected through internet. The network game system identifies game participants, provides the customers (participants) with a right to proceed the game once whenever they buy more than a predetermined amount of money. The game can be played only once a day and is terminated within a predetermined period of time.

The second embodiment of the network game system differs from the foregoing first embodiment of the network game system in that the amount of money spent by the customers or game participants is a condition to proceed the game.

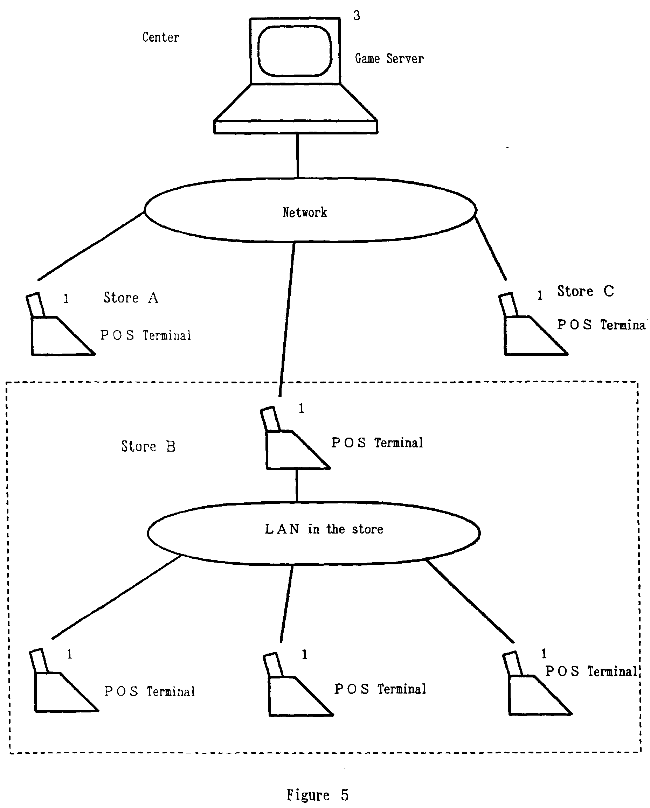

Illustrated in FIG.5 is system configuration of the network game system according to the second embodiment of the present invention. Since the game server in the center does not differ from that in the first embodiment, files are omitted in FIG.5. The POS terminals installed in a shop may be a POS terminal also acting as a game terminal if the shop is small and the number of customers is relatively limited. On the other hand, a larger shop having many customers should have one main POS terminal 1 acting as a POS server and a plurality of POS terminals (client terminals) are installed and connected by LAN (local area network) so that the game can be played without disturbing normal business. These additional POS terminals may be provided with various guides and some other functions other than the games.

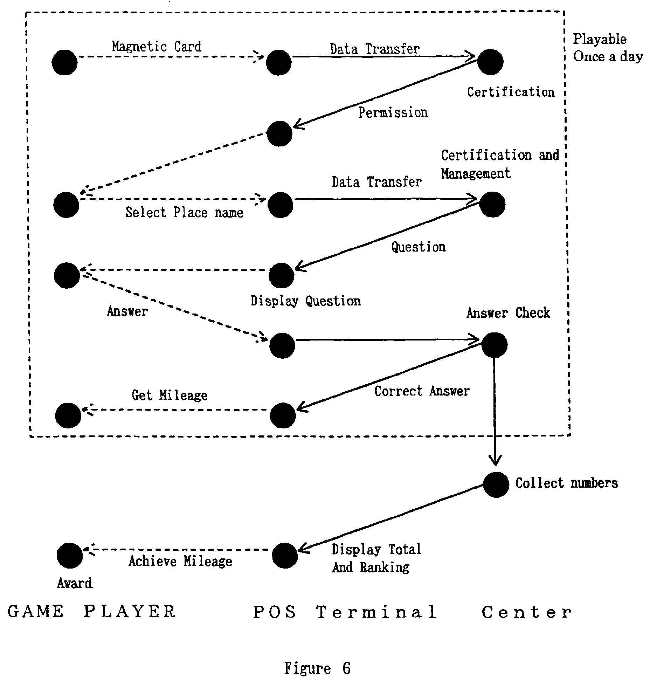

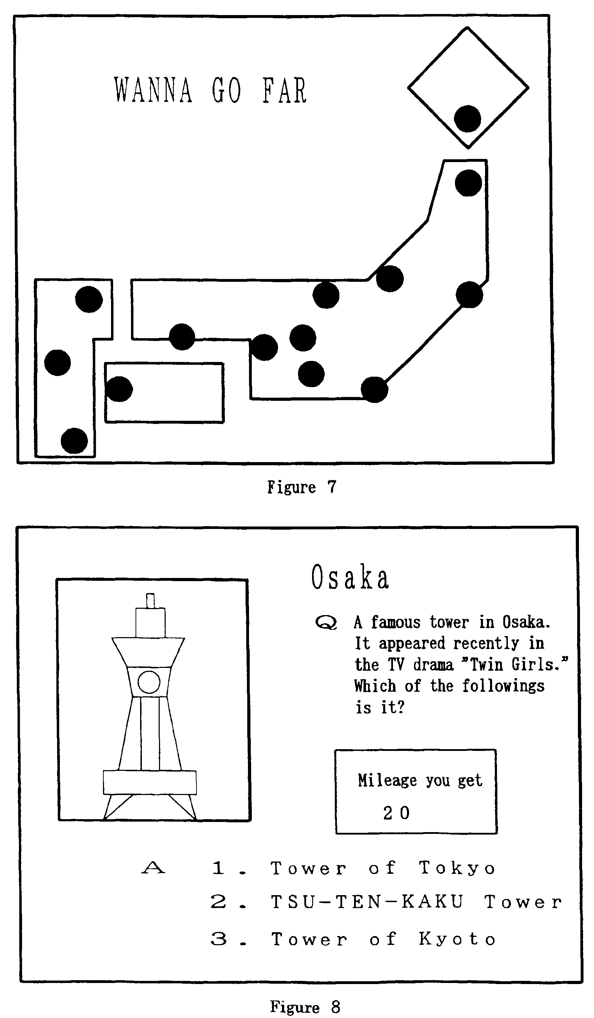

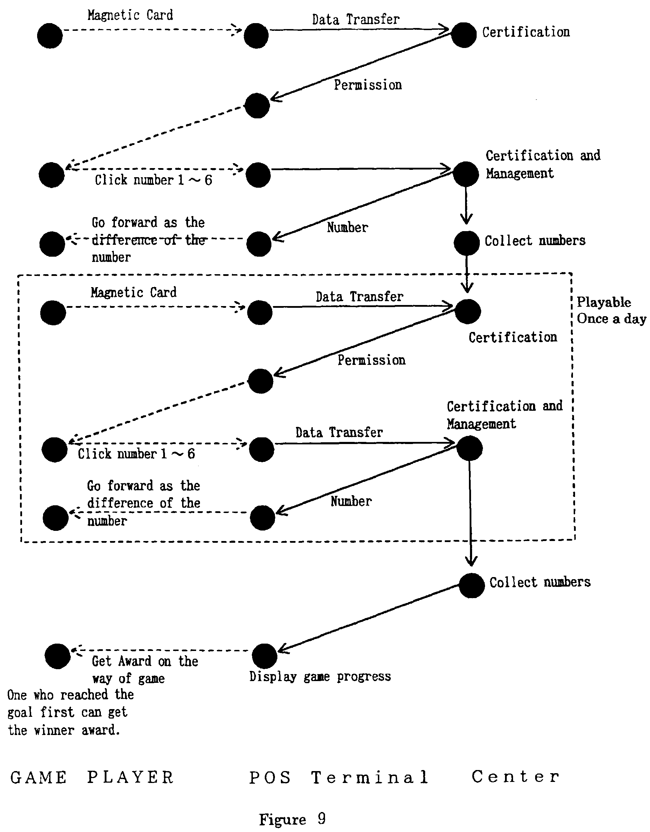

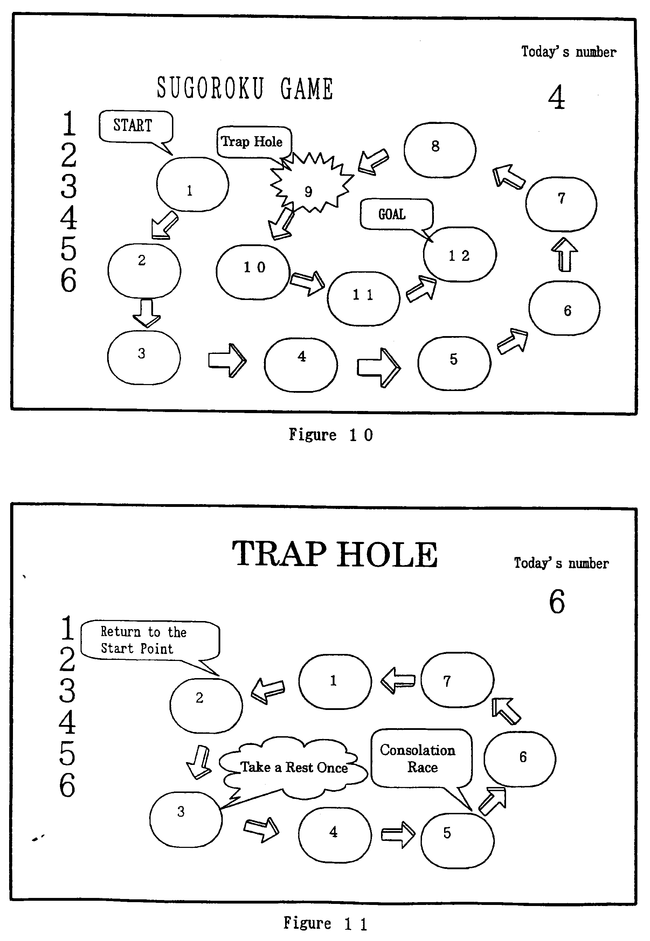

Illustrated in FIG.6 is a flowchart showing how a "we'd like to visit distant places" game proceeds. FIG.7 is a first screen display of the "we'd like to visit distant places" game. FIG.8 is a second screen display of the "we'd like to visit distant places" game. FIG.9 is a flowchart of a "sugoroku" game. FIG.10 is a first screen display of the "sugoroku" game while FIG.11 is a second screen display of the "sugoroku" game.

Now, the operation of the second embodiment of the network game system according to the present invention will be described by reference to FIGs.5 through 11.

Game participants enter their names, addresses, phone numbers, etc. through any POS terminal 1 in any shop. Upon completion of entering all necessary input data, they are registered in the center and magnetic cards are issued for the game participants. The above operation is identical to the first embodiment.

Whenever the game participants buy in excess of a predetermined amount of money, they gain certain points representing a right to proceed one or more game. For example, one point is gained at every 1,000 yen shopping. This means that 5 points are gained when they spend 5,000 yen. The magnetic card is passed through the POS terminal 1 when paying at the cashier and the acquired paints are registered in the user file in the center, thereby permitting the customer to proceed the game depending on the points at any time. However, the participants are allowed to proceed one kind of game only once a day. In other words, the customers are allowed to proceed one game once a day when they gained 1 point and they can proceed second and third games when they gained two and three points, respectively. Some games require two or three points to proceed the games once. Also, different games can be programmed to be terminated in different periods of time.

When the game participants go to any shop to play the game, they are supposed to touch with a finger icon of the games as displayed on the initial screen of FIG.2 for choosing the game. A magnetic card is passed through the POS terminal 1 to identify the participant while the game selection screen in FIG.3 is displayed. The data on the magnetic card is transferred to the center. If corresponding data is found in the operation file, the POS terminal 1 is notified for permission of data entry. Upon completion of identifying the individual participant, a pending game selection screen is displayed on the POS terminal 1. The participant can choose one of the games. It is preferable to prepare a bingo game and some other relatively simple games that will be described hereinafter. Since number of points required to play a certain game is predetermined, displayed on the screen are only the games that can be played with the points currently acquired by the participant. The participant can choose any game displayed on the selection screen. It is possible to choose one or more games to proceed in parallel.

The center retrieve the user file based on the data on the magnetic card. Upon confirmating registration of the user (participant), the operation file is retrieved to read out the pending (or proceeding) game or games, points acquired by the user and the current status to be transferred to the POS terminal for being displayed.

FIG.6 is a flowchart of the "we'd like to visit distant places" game to proceed the game by answering series of quizzes. This game proceeds by touching with a finger any desired place on a map displayed on a screen as shown in FIG.7. A quiz relating to the selected place is displayed on the screen as shown in FIG.8. If the answer is correct, a predetermined mileage is ranted depending on difficulty of the quiz and the time to reach the answer. A prize will be awarded depending on the mileage acquired within 30 days.

Upon touching with a finger any place on the map, the data is transferred from the POS terminal to the center. The center retrieve the game file to transfer a quiz relating to the place to the POS terminal. When the game participant chose one of optional answers by touching with a finger, the selected answer is transferred to the center to determine if the answer is correct. If the answer was wrong, the POS terminal displays "Sorry; you are wrong." On the other hand, if the answer is correct, the mileage of the quiz is granted. However, if it took more than one half of the time limit to reach the correct answer, one half of the mileage is granted. If it took longer than the time limit to reach the correct answer, it is deemed to be "unanswered" and no mileage is granted. Acquired mileage is saved in the operation file in the center and a prize is awarded when the acquired mileage reaches a predetermined level. If the predetermined mileage is not reached within 30 days, only consolation prize is awarded. No consolation prize is awarded if the game is not played 10 or more times.

FIG.9 is a flowchart showing how the "sugoroku" game proceeds. As shown in FIG.9, this game is played by choosing any number of 1-6. A randomly generated number is, then, transferred from the center. You can move forward the number of steps equal to the transferred number minus the chosen number. The game server 3 in the center randomly generates 1-6 numbers in equal probability and forwards the number added to the number from the POS terminal. A prize will be awarded if a goal is reached within 30 days by challenging once a day. Shown in FIG.10 is a first screen display of the "sugoroku" game. Like a typical "sugoroku" game, this game includes such steps as "take a rest once", "move back two steps", "return to the start point", etc. FIG.11 is a second screen display of the "sugoroku" game when fallen into a pitfall.

Although the game can proceed only once a day in the above embodiment. it is possible to proceed two to three times a day depending on games.

As described above, the second embodiment of the network game system according to the present invention comprises the game server in the center and one or more POS terminal installed in each shop of a store and interconnected through internet. The game server identifies individual game participant and grants a right to proceed the game once when his/her purchase exceeds a certain amount of money. The game continues once a day and terminates within a predetermined period of time. Customers can play the game when he/she buys a certain amount, thereby encouraging customers to come for shopping as often as possible.

Although the above mentioned second embodiment of the network game system grants a right to proceed the game upon purchase in excess of a predetermined amount, it is possible to apply the game to a "pachinko" game to save extra balls so that he/she can proceed the game once when the saved balls reach a predetermined number.

### (Advantage of the Invention)

As apparent from the above description, the network game system according to the present invention can provide enjoyment of the game over a long period of time because the game participants are identified and allowed to proceed the game once a day over a predetermined period of time.

In case of applying the network game system to a service event for a shopping mall, it will help to encourage customers (shoppers) to come to the shopping mall as frequently as possible for proceeding the game once a day, thereby significantly increasing the number of customers.

Since the period of time to proceed the game is restricted, the game participants may revisit the shops more frequently in such period of time.

The use of POS terminals as game terminals, even smaller scale of stores can provide the customers with enjoyment of the game without installation of additional game terminals, thereby attracting customers with minimum expense for facilities.

For larger scale stores, a plurality of POS terminals tied to LAN system can be used not only for the games but also for other events such as sales promotion.

## Claims

1. A network game system including a central unit for controlling the way of proceeding a game or games and a plurality of terminals connected to said center unit through network for enabling customers to play the game through said terminals, characterized in that: said terminals include means for identifying each game participant, and said central unit includes means for registering the game participants , means for recording numbers and characters entered by the participants and means to proceed the game predetermined times a day.

2. A network game system of claim 1, wherein said terminals are POS terminals.

3. A network game system of claim 1, wherein said central unit includes means for terminating the game when a predetermined period of time has lapsed.

4. A network game system of claim 1, wherein said terminals include means for transferring the amount of money spent for shopping by each game participant to said central apparatus and said central apparatus includes means for proceeding the game once when the game participant spends in excess of a predetermined amount of money.
